# EUROPEAN PATENT SPECIFICATION

(11) **EP 3 454 404 B1**
(45) Date of publication and mention of the grant of the patent: **23.06.2021**
(21) Application number: 17190703.3
(22) Date of filing: 12.09.2017
(51) Int. Cl.: H01M 10/04

(54) **METHOD FOR JOINING AN ELECTRODE STACK**
VERFAHREN ZUR HERSTELLUNG EINES ELEKTRODENSTAPELS
MÉTHODE POUR LA FORMATION D'UN EMPILEMENT D'ÉLECTRODES

(43) Date of publication of application: 13.03.2019
(73) Proprietor: Robert Bosch GmbH, 70442 Stuttgart (DE)
(72) Inventor: Lustfeld, Martin, 01309 Dresden (DE); Ilin, Alexander, 71642 Ludwigsburg (DE); Kiedrowski, Thomas, 74372 Sersheim (DE); Schaenzel, Michael, 73457 Essingen (DE)
(74) Representative: Bee, Joachim

(56) References cited:
- EP-A1- 3 136 466
- WO-A1-2007/032273
- CA-A1- 2 685 922
- US-A1- 2014 363 727

## Description

The invention relates to a method for positive substance joining an electrode stack of several partial stacks, whereat a partial stack comprises an anode with an anode tab, a cathode with a cathode tab and at least one separator arranged between the anode and the cathode, and whereat at least one further separator is arranged between the partial stacks.

### State of the Art

Electrical energy can be stored by means of batteries. Batteries change chemical energy into electrical energy. Thereat, primary batteries and secondary batteries are known. Primary batteries are functional only once. Secondary Batteries which are also called accumulators are rechargeable. Especially, lithium ion battery cells are used in rechargeable batteries. Lithium ion battery cells have high energy densities and a very small self-discharge rate.

Modern lithium ion battery cells have several electrode foils. Said electrode foils are stacked when producing a battery cell. An electrode stack is formed by several partial stacks, whereat a partial stack comprises an anode containing a copper foil about 8 µm thick, a separator and a cathode containing an aluminum foil about 12 µm thick. About fifty of such partial stacks are placed on top of each other. Said process of placing the partial stacks on top of each other is called stacking.

For connecting the battery cell electrically, all partial stacks are connected electrically in parallel and are connected to current collectors. The anodes and the cathodes of the partial stacks must be connected with each other and with the respective current collector. A requirement to the joining of the partial stacks is a high mechanical stability corresponding to the stability of the single foils and a homogenous connection for a homogenous electrical resistance.

As a method for joining, ultrasonic welding is known in the state of the art. Said method is well-tried and is used in series production. However, said method holds a high risk in series production as by ultrasonic welding particles arise that may lead to short cuts within the battery.

Document US 2016/0260952 A1 discloses a connecting structure and a method for producing a connection between a grid and an electrode tab of a secondary battery which may ensure a stable connection between a grid and an electrode tab of an electrode assembly and which allows improved productivity.

Document US 2011/0117418 A1 discloses a single cell for a battery which comprises an electrode stack disposed within a cell housing and a method for production the single cell

US 2014/363727 A1 discloses an electrode assembly including a cell stack part having (a) a structure in which one kind of radical unit is repeatedly disposed, or (b) a structure in which at least two kinds of radical units are disposed in a predetermined order. The one kind of radical unit has a four-layered structure in which first electrode, first separator, second electrode and second separator are sequentially stacked or a repeating structure in which the four-layered structure is repeatedly stacked. Each of the at least two kinds of radical units are stacked by ones to form the four-layered structure or the repeating structure.

EP3136466 discloses a manufacturing method of an electrode assembly, the method including blanking a first electrode from a first base including a first coated region and a first uncoated region, blanking a second electrode from a second base including a second coated region and a second uncoated region, laminating a separator on the second electrode, cutting the laminated second electrode with the separator, and stacking the laminated second electrode and the first electrode.

### Disclosure of the Invention

A method for positive substance joining an electrode stack of several partial stacks is proposed. Thereat, a partial stack comprises an anode with an anode tab, a cathode with a cathode tab and at least one separator arranged between the anode and the cathode. At least one further separator is arranged between the partial stacks.

According to the invention, which is defined in claims 1 and 2, the several partial stacks are placed on top of each other in a stacking process, and the anode tabs of the several partial stacks are joint to each other and with an anode current collector in a multi-stage joining process, and the cathode tabs of the several partial stacks are joint to each other and with a cathode current collector in a multi-stage joining process. A frequency for stacking the partial stacks is for example 5 Hz.

The invention according to claim 1 comprises the following steps that are explained below.

Within a step a), the anode current collector and the cathode current collector are placed on a bottom of a depot.

Within a step b), a first partial stack is placed into the depot.

Within a step c), the anode tab of the first partial stack is joined with the anode current collector and the cathode tab of the first partial stack is joined with the cathode current collector.

Within a step d), a subsequent partial stack is placed into the depot, whereat at least one further separator is placed between the previous partial stack and the subsequent partial stack.

Within a step e), the anode tab of the subsequent partial stack is joined with the anode tab of the previous partial stack and the cathode tab of the subsequent partial stack is joined with the cathode tab of the previous partial stack.

Within a step f), the steps d) and e) are repeated until the anode tab of the last partial stack of the electrode stack is joined to the anode tab of the next-to-last partial stack of the electrode stack, and until the cathode tab of the last partial stack of the electrode stack is joined to the cathode tab of the next-to-last partial stack of the electrode stack.

The invention according to claim 2 comprises the following steps that are explained below.

Within a step a), a first partial stack is placed into a depot.

Within a step b), a subsequent partial stack is placed into the depot, whereat at least one further separator is placed between the previous partial stack and the subsequent partial stack.

Within a step c), the anode tab of the subsequent partial stack is joined with the anode tab of the previous partial stack and the cathode tab of the subsequent partial stack is joined with the cathode tab of the previous partial stack.

Within a step d), steps b) and c) are repeated until the anode tab of the last partial stack of the electrode stack is joined to the anode tab of the next-to-last partial stack of the electrode stack, and until the cathode tab of the last partial stack of the electrode stack is joined to the cathode tab of the next-to-last partial stack of the electrode stack.

Within a step e), the anode current collector and the cathode current collector are placed into the depot.

Within a step f), the anode tabs of the partial stacks of the electrode stack joined to each other in steps a) to d) are joined with the anode current collector, and the cathode tabs of the partial stacks of the electrode stack joined to each other in steps a) to d) are joined with the cathode current collector.

According to a preferred embodiment of the invention, the joining process is laser welding. Hence, within the joining process, the anode tabs and the cathode tabs of the partial stacks are joined such that a high mechanical stability and a low and homogenous electrical resistance are obtained.

Thereat, different variants of joining can be distinguished according to geometry of joining, intensity of joining and hold-down techniques. According to the geometry of joining, generally the three variants point joining, line joining and radiation forming are distinguished. Thereat, by point joining one or more points arise at the single joint. By line joining, a line or several lines arise. By radiation forming a radiation geometry is shaped for example by a constant or a programmable radiation forming element.

The single joints between the tabs can be arranged at the same position of the tabs. The single joints between the tabs can also be arranged shifted relatively to each other. The advantage of arranging the single joints shifted relatively to each other is that protrusions and recesses are distributed homogenously over the area of the tabs.

According intensity of joining, thermal conductivity joining and deep joining are distinguished. Thereat, thermal conductivity joining has a lower intensity than deep joining

By thermal conductivity joining, the uppermost tab is joined while the tab lying beyond is influenced only rarely. Thus, a homogenous joining of all tabs is obtained. By deep joining, a metal oxide layer (e.g. Al₂O₃) that arose by joining the tabs is broken up. Thus, a high electric conductivity is obtained.

Pressurized air can be applied in the joining process for compressing the tabs at the joints. Also, mechanical hold-down devices can be applied in the stacking process for compressing the partial stacks.

A battery cell obtained by the above described methods but not forming the invention is useable advantageously in particular in an electric vehicle (EV), in a hybrid electric vehicle (HEV), in a plug-in hybrid vehicle (PHEV), in a consumer electronic product or in a stationary application. Consumer electronic products are for example mobile phones, tablet PCs or notebooks. A stationary application is for example a wind power plant. But also, other applications are feasible.

### Advantages of the Invention

The invention provides a method for positive substance joining an electrode stack, whereat the formation of particles that may cause short circuits within a battery are avoided. Furthermore, the process stability of the multi-stage joining process according to the invention is significantly higher than in a single-stage laser joining process. By dint of the method according to the invention, a hazardous process step, which is only hardly controllable or is controllable only with considerable effort, is replaced by several small process steps that are controllable easily. This happens without any loss of time as the single joining is integrated into the stacking process. Furthermore, the method according to the invention allows an online process control. Also, the method according to the invention offers a cheap solution as an existing manufacturing plant may be used after minor modification.

### Brief Description of the Drawings

For a better understanding of the aforementioned embodiments of the invention as well as additional embodiments thereof, reference should be made to the description of embodiments below, in conjunction with the appended drawings showing:
- Figure 1a: a perspective view at a first embodiment of an electrode stack to be joined;
- Figure 1b: a side view at the first embodiment of the electrode stack;
- Figure 1c: a front view at the first embodiment of the electrode stack;
- Figure 2a: a perspective view at a second embodiment of an electrode stack to be joined;
- Figure 2b: a side view at the second embodiment of the electrode stack;
- Figure 2c: a front view at the second embodiment of the electrode stack;
- Figure 3: a perspective view at a stacking process of the electrode stack according to the first embodiment;
- Figure 4: a schematic view at a first embodiment of a method for joining an electrode stack; and
- Figure 5: a schematic view at a second embodiment of a method for joining an electrode stack.

### Description of Embodiments

Hereinafter, preferred embodiments of the present invention will be described with reference to the drawings. The drawings only provide schematic views of the invention. Like reference numerals refer to corresponding parts, elements, or components throughout the figures, unless indicated otherwise.

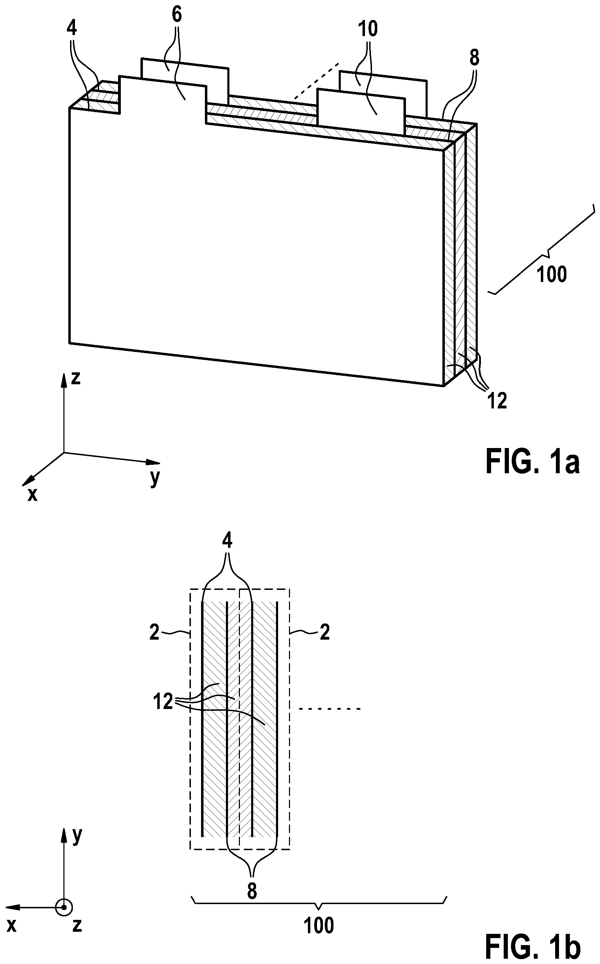

In the following, a three-dimensional coordinate system containing an x-direction, a y-direction and a z-direction is used. Said coordinate system is valid for figures 1a, 1b, 1c, 2a, 2b, 2c and 3.

Figure 1a shows a perspective view at a first embodiment of an electrode stack 100 to be joined. The electrode stack 100 comprises several anodes 4 and several cathodes 8, whereat every anode 4 contains an anode tab 6 and every cathode 8 contains a cathode tab 10. Several separators 12 are arranged between the anodes 4 and the cathodes 8. Thereat, the anode tabs 6 and the cathode tabs 10 protrude in z-direction of the three-dimensional coordinate system.

Figure 1b shows a side view at the first embodiment of the electrode stack 100 seen in z-direction of the three-dimensional coordinate system, whereat the electrode stack 100 comprises several partial stacks 2. Thereat, every partial stack 2 comprises an anode 4, a cathode 8 and a separator 12 arranged between the anode 4 and the cathode 8. Further separators 12 are arranged between the partial stacks 2.

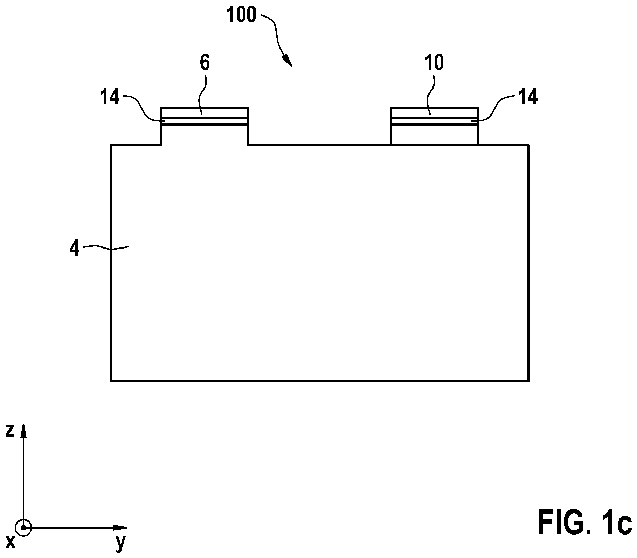

Figure 1c shows a front view at the first embodiment of the electrode stack 100 seen in x-direction of the three-dimensional coordinate system. Thereat, two joints 14 are shown that are arranged on the anode tab 6 and on the cathode tab 10.

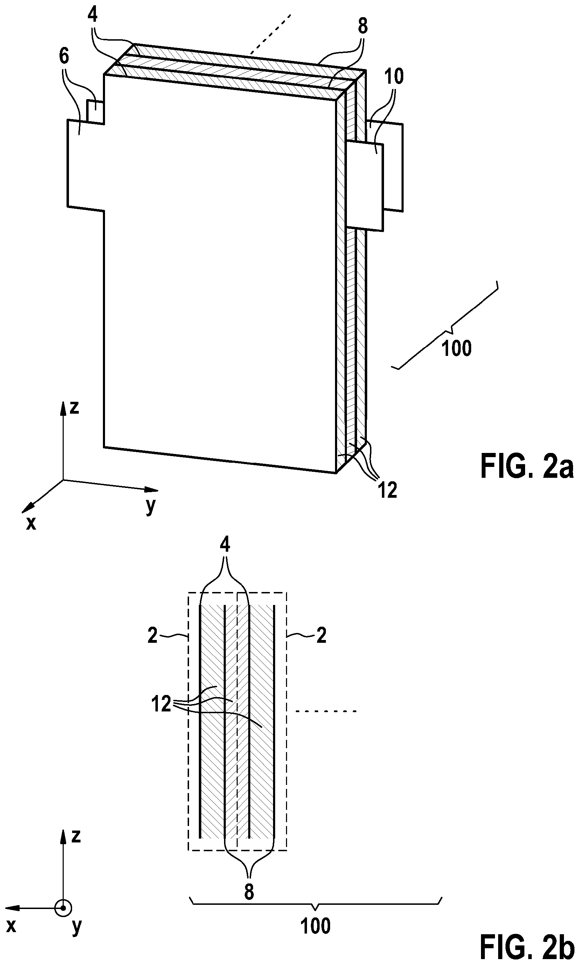

Figure 2a shows a perspective view at a second embodiment of an electrode stack 100 to be joined. The electrode stack 100 comprises several anodes 4 and several cathodes 8, whereat every anode 4 contains an anode tab 6 and every cathode 8 contains a cathode tab 10. Several separators 12 are arranged between the anodes 4 and the cathodes 8. Thereat, the anode tabs 6 and the cathode tabs 10 protrude in y-direction of the three-dimensional coordinate system, having opposite orientation.

Figure 2b shows a side view at the second embodiment of the electrode stack 100 seen in y-direction of the three-dimensional coordinate system, whereat the electrode stack 100 comprises several partial stacks 2. Thereat, every partial stack 2 comprises an anode 4, a cathode 8 and a separator 12 arranged between the anode 4 and the cathode 8. Further separators 12 are arranged between the partial stacks 2.

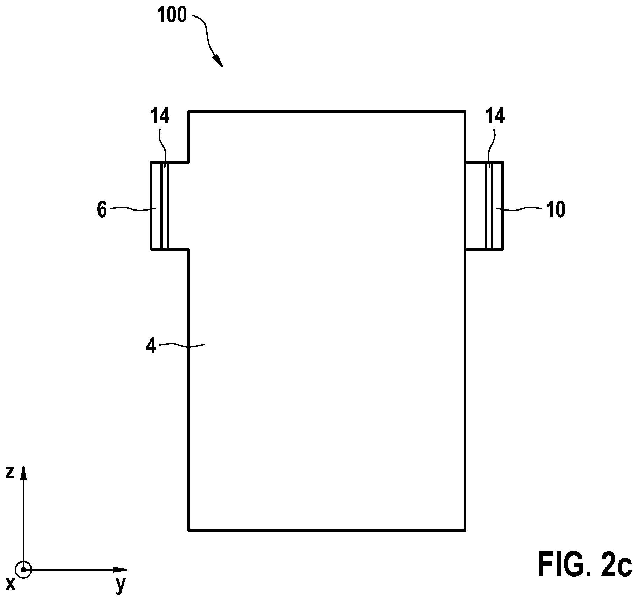

Figure 2c shows a front view at the second embodiment of the electrode stack 100 seen in x-direction of the three-dimensional coordinate system. Thereat, two joints 14 are shown that are arranged on the anode tab 6 and on the cathode tab 10.

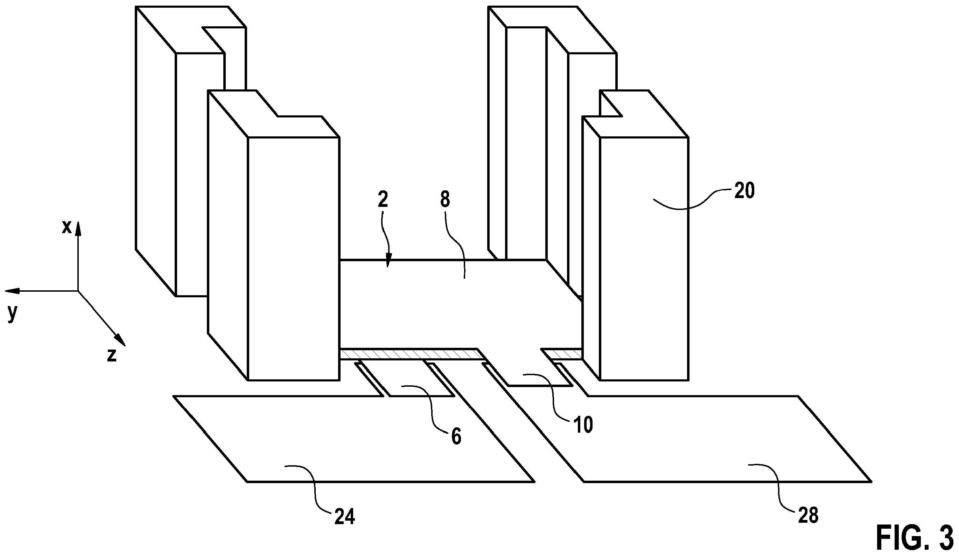

Figure 3 shows a perspective view at a stacking process of the electrode stack 100 according to the first embodiment. An anode current collector 24 and a cathode current collector 28 are placed on a bottom of a depot 20. The first partial stack 2 of the electrode stack 100 is placed into the depot 20 such that the anode tab 6 of the first partial stack 2 is arranged on the anode current collector 24 and that the cathode tab 10 of the first partial stack 2 is arranged on the cathode current collector 28.

In the following, the anode tab 6 of the first partial stack 2 is joined with the anode current collector 24 and the cathode tab 10 of the first partial stack 2 is joined with the cathode current collector 28. Then, subsequent partial stacks 2 are placed into the depot 20, whereat separators 12 are placed between the previous partial stack 2 and the subsequent partial stack 2. Also, the anode tabs 6 of the subsequent partial stacks 2 are joined with the anode tabs 6 of the previous partial stacks 2 and the cathode tabs 10 of the subsequent partial stacks 2 are joined with the cathode tabs 10 of the previous partial stacks 2.

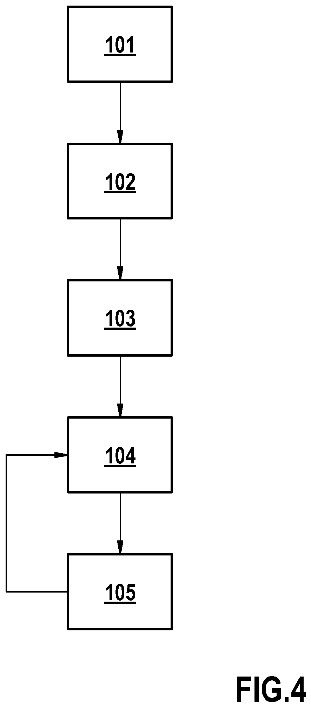

Figure 4 shows a schematic view at a first embodiment of a method for joining an electrode stack 100.

In a first step 101 the anode current collector 24 and the cathode current collector 28 are placed on the bottom of the depot 20.

In a second step 102 a first partial stack 2 is placed into the depot 20.

In a third step 103 the anode tab 6 of the first partial stack 2 is joined with the anode current collector 24 and the cathode tab 10 of the first partial stack 2 is joined with the cathode current collector 28.

In a fourth step 104 a subsequent partial stack 2 is placed into the depot 20, whereat at a further separator 12 is placed between the previous partial stack 2 and the subsequent partial stack 2.

In a fifth step 105 the anode tab 6 of the subsequent partial stack 2 is joined with the anode tab 6 of the previous partial stack 2 and the cathode tab 10 of the subsequent partial stack 2 is joined with the cathode tab 10 of the previous partial stack 2.

Then, the fourth step 104 and the fifth step 105 are repeated until the anode tab 6 of the last partial stack 2 of the electrode stack 100 is joined to the anode tab 6 of the next-to-last partial stack 2 of the electrode stack 100, and until the cathode tab 10 of the last partial stack 2 of the electrode stack 100 is joined to the cathode tab 10 of the next-to-last partial stack 2 of the electrode stack 100.

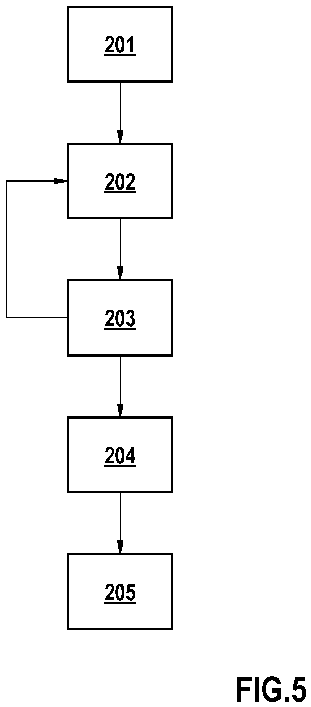

Figure 5 shows a schematic view at a second embodiment of a method for joining an electrode stack 100.

In a first step 201 a first partial stack 2 is placed into the depot 20.

In a second step 202 a subsequent partial stack 2 is placed into the depot 20, whereat a further separator 12 is placed between the previous partial stack 2 and the subsequent partial stack 2.

In a third step 203 the anode tab 6 of the subsequent partial stack 2 is joined with the anode tab 6 of the previous partial stack 2 and the cathode tab 10 of the subsequent partial stack 2 is joined with the cathode tab 10 of the previous partial stack 2.

Then, the second step 202 and the third step 203 are repeated until the anode tab 6 of the last partial stack 2 of the electrode stack 100 is joined to the anode tab 6 of the next-to-last partial stack 2 of the electrode stack 100, and until the cathode tab 10 of the last partial stack 2 of the electrode stack 100 is joined to the cathode tab 10 of the next-to-last partial stack 2 of the electrode stack 100.

In a fourth step 204 the anode current collector 24 and the cathode current collector 28 are placed into the depot 20 onto the partial stacks 2.

In a fifth step 205 the anode tabs 6 of the partial stacks 2 of the electrode stack 100 that are joined to each other are joined with the anode current collector 24, and the cathode tabs 10 of the partial stacks 2 of the electrode stack 100 that are joined to each other are joined with the cathode current collector 28.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Method for positive substance joining an electrode stack (100) of several partial stacks (2), whereat
a partial stack (2) comprises an anode (4) with an anode tab (6), a cathode (8) with a cathode tab (10) and at least one separator (12) arranged between the anode (4) and the cathode (8), and whereat
at least one further separator (12) is arranged between the partial stacks (2), **characterized in that**
the several partial stacks (2) are placed on top of each other in a stacking process, and
the anode tabs (6) of the several partial stacks (2) are joint to each other and with an anode current collector (24) in a multi-stage joining process, and
the cathode tabs (10) of the several partial stacks (2) are joint to each other and with a cathode current collector (28) in a multi-stage joining process, and the method further comprises the following steps:
a1) Placing the anode current collector (24)
and the cathode current collector (28)
on a bottom of a depot (20);
b1) Placing a first partial stack (2) into the depot (20);
c1) Joining the anode tab (6) of the first partial stack (2) with the anode current collector (24) and
joining the cathode tab (10) of the first partial stack (2) with the cathode current collector (28);
d1) Placing a subsequent partial stack (2) into the depot (20), whereat
at least one further separator (12) is placed between the previous partial stack (2) and the subsequent partial stack (2);
e1) Joining the anode tab (6) of the subsequent partial stack (2) with the anode
tab (6) of the previous partial stack (2) and
joining the cathode tab (10) of the subsequent partial stack (2) with the cathode tab (10) of the previous partial stack (2);
f1) Repeating steps d) and e) until
the anode tab (6) of the last partial stack (2) of the electrode stack (100) is joined to the anode tab (6) of the next-to-last partial stack (2) of the electrode stack (100), and until
the cathode tab (10) of the last partial stack (2) of the electrode stack (100) is joined to the cathode tab (10) of the next-to-last partial stack (2) of the electrode stack (100).

2. Method for positive substance joining an electrode stack (100) of several partial stacks (2), whereat
a partial stack (2) comprises an anode (4) with an anode tab (6), a cathode (8) with a cathode tab (10) and at least one separator (12) arranged between the anode (4) and the cathode (8), and whereat
at least one further separator (12) is arranged between the partial stacks (2), **characterized in that**
the several partial stacks (2) are placed on top of each other in a stacking process, and
the anode tabs (6) of the several partial stacks (2) are joint to each other and with an anode current collector (24) in a multi-stage joining process, and
the cathode tabs (10) of the several partial stacks (2) are joint to each other and with a cathode current collector (28) in a multi-stage joining process, and the method further comprises the following steps:
a2) Placing a first partial stack (2) into a depot (20);
b2) Placing a subsequent partial stack (2) into the depot (20), whereat at least one further separator (12) is placed between the previous partial stack (2) and the subsequent partial stack (2);
c2) Joining the anode tab (6) of the subsequent partial stack (2) with the anode tab (6) of the previous partial stack (2) and
joining the cathode tab (10) of the subsequent partial stack (2) with the cathode tab (10) of the previous partial stack (2);
d2) Repeating steps b) and c) until
the anode tab (6) of the last partial stack (2) of the electrode stack (100) is joined to the anode tab (6) of the next-to-last partial stack (2) of the electrode stack (100), and until
the cathode tab (10) of the last partial stack (2) of the electrode stack (100) is joined to the cathode tab (10) of the next-to-last partial stack (2) of the electrode stack (100);
e2) Placing the anode current collector (24)
and the cathode current collector (28)
into the depot (20);
f2) Joining the anode tabs (6) of the partial stacks (2) of the electrode stack (100) joined to each other in steps a) to d) with the anode current collector (24), and joining the cathode tabs (10) of the partial stacks (2) of the electrode stack (100) joined to each other in steps a) to d) with the cathode current collector (28).

3. Method according to one of the preceding claims, **characterized in that** the joining process is laser welding.

4. Method according to one of the preceding claims, **characterized in that** single joints (14) between the tabs (6, 10) are arranged at the same position of the tabs (6, 10).

5. Method according to one of claims 1 to 3, **characterized in that** single joints (14) between the tabs (6, 10) are arranged shifted relatively to each other.

6. Method according to one of the preceding claims, **characterized in that** pressurized air is applied in the joining process for compressing the tabs (6, 10) at the joints (14).

7. Method according to one of the preceding claims, **characterized in that** mechanical hold-down devices are applied in the stacking process for compressing the partial stacks (2).

## Patentansprüche

1. Verfahren zum stoffschlüssigen Fügen eines Elektrodenstapels (100) aus mehreren Teilstapeln (2), wobei ein Teilstapel (2) eine Anode (4) mit einem Anodenlappen (6), eine Kathode (8) mit einem Kathodenlappen (10) und mindestens einen Separator (12) umfasst, der zwischen der Anode (4) und der Kathode (8) angeordnet ist, und wobei
mindestens ein weiterer Separator (12) zwischen den Teilstapeln (2) angeordnet ist,
**dadurch gekennzeichnet, dass**
die mehreren Teilstapel (2) in einem Stapelungsprozess aufeinander platziert werden, und
die Anodenlappen (6) der mehreren Teilstapel (2) in einem mehrstufigen Fügeprozess aneinander und an einen Anodenstromabnehmer (24) gefügt werden, und
die Kathodenlappen (10) der mehreren Teilstapel (2) in einem mehrstufigen Fügeprozess aneinander und an einen Kathodenstromabnehmer (28) gefügt werden, und wobei das Verfahren des Weiteren die folgenden Schritte umfasst:
a1) Platzieren des Anodenstromsammlers (24) und des Kathodenstromsammlers (28) am Boden eines Depots (20);
b1) Platzieren eines ersten Teilstapels (2) in dem Depot (20);
c1) Fügen des Anodenlappens (6) des ersten Teilstapels (2) an den Anodenstromsammler (24) und
Fügen des Kathodenlappens (10) des ersten Teilstapels (2) an den Kathodenstromsammler (28);
d1) Platzieren eines nachfolgenden Teilstapels (2) in dem Depot (20), wobei mindestens ein weiterer Separator (12) zwischen dem vorhergehenden Teilstapel (2) und dem nachfolgenden Teilstapel (2) platziert wird;
e1) Fügen des Anodenlappens (6) des nachfolgenden Teilstapels (2) an den Anodenlappen (6) des vorhergehenden Teilstapels (2) und
Fügen des Kathodenlappens (10) des nachfolgenden Teilstapels (2) an den Kathodenlappen (10) des vorherigen Teilstapels (2);
f1) Wiederholen der Schritte d) und e) bis der Anodenlappen (6) des letzten Teilstapels (2) des Elektrodenstapels (100) an den Anodenlappen (6) des vorletzten Teilstapels (2) des Elektrodenstapels (100) gefügt worden ist, und bis
der Kathodenlappen (10) des letzten Teilstapels (2) des Elektrodenstapels (100) an den Kathodenlappen (10) des vorletzten Teilstapels (2) des Elektrodenstapels (100) gefügt worden ist.

2. Verfahren zum stoffschlüssigen Fügen eines Elektrodenstapels (100) aus mehreren Teilstapeln (2), wobei ein Teilstapel (2) eine Anode (4) mit einem Anodenlappen (6), eine Kathode (8) mit einem Kathodenlappen (10) und mindestens einen Separator (12) umfasst, der zwischen der Anode (4) und der Kathode (8) angeordnet ist, und wobei
mindestens ein weiterer Separator (12) zwischen den Teilstapeln (2) angeordnet ist,
**dadurch gekennzeichnet, dass**
die mehreren Teilstapel (2) in einem Stapelungsprozess aufeinander platziert werden, und
die Anodenlappen (6) der mehreren Teilstapel (2) in einem mehrstufigen Fügeprozess aneinander und an einen Anodenstromsammler (24) gefügt werden, und
die Kathodenlappen (10) der mehreren Teilstapel (2) in einem mehrstufigen Fügeprozess aneinander und an einen Kathodenstromsammler (28) gefügt werden, und wobei das Verfahren des Weiteren die folgenden Schritte umfasst:
a2) Platzieren eines ersten Teilstapels (2) in einem Depot (20);
b2) Platzieren eines nachfolgenden Teilstapels (2) in dem Depot (20), wobei mindestens ein weiterer Separator (12) zwischen dem vorhergehenden Teilstapel (2) und dem nachfolgenden Teilstapel (2) platziert wird;
c2) Fügen des Anodenlappens (6) des nachfolgenden Teilstapels (2) an den Anodenlappen (6) des vorhergehenden Teilstapels (2) und
Fügen des Kathodenlappens (10) des nachfolgenden Teilstapels (2) an den Kathodenlappen (10) des vorherigen Teilstapels (2);
d2) Wiederholen der Schritte b) und c) bis der Anodenlappen (6) des letzten Teilstapels (2) des Elektrodenstapels (100) an den Anodenlappen (6) des vorletzten Teilstapels (2) des Elektrodenstapels (100) gefügt worden ist, und bis
der Kathodenlappen (10) des letzten Teilstapels (2) des Elektrodenstapels (100) an den Kathodenlappen (10) des vorletzten Teilstapels (2) des Elektrodenstapels (100) gefügt worden ist;
e2) Platzieren des Anodenstromsammlers (24) und des Kathodenstromsammlers (28) in dem Depot (20);
f2) Fügen des Anodenlappens (6) der Teilstapel (2) des Elektrodenstapels (100), die in den Schritten a) bis d) aneinander gefügt wurden, an den Anodenstromsammler (24), und Fügen der Kathodenlappen (10) der Teilstapel (2) des Elektrodenstapels (100), die in den Schritten a) bis d) aneinander gefügt wurden, an den Kathodenstromsammler (28).

3. Verfahren nach einem der vorhergehenden Ansprüche, **dadurch gekennzeichnet, dass** der Fügeprozess Laserschweißen ist.

4. Verfahren nach einem der vorhergehenden Ansprüche, **dadurch gekennzeichnet, dass** die einzelnen Fügestellen (14) zwischen den Lappen (6, 10) an der gleichen Position der Lappen (6, 10) angeordnet sind.

5. Verfahren nach einem der Ansprüche 1 bis 3, **dadurch gekennzeichnet, dass** einzelne Fügestellen (14) zwischen den Lappen (6, 10) relativ verschoben zueinander angeordnet sind.

6. Verfahren nach einem der vorhergehenden Ansprüche, **dadurch gekennzeichnet, dass** in dem Fügeprozess Druckluft angewendet wird, um die Lappen (6, 10) an den Fügestellen (14) zu komprimieren.

7. Verfahren nach einem der vorhergehenden Ansprüche, **dadurch gekennzeichnet, dass** mechanische Niederhaltevorrichtungen in dem Stapelprozess angewendet werden, um die Teilstapel (2) zu komprimieren.

## Revendications

1. Procédé d'assemblage cohésif d'un empilement d'électrodes (100) constitué d'une pluralité d'empilements partiels (2), dans lequel
un empilement partiel (2) comprend une anode (4) avec une languette anodique (6), une cathode (8) avec une languette cathodique (10), et au moins un séparateur (12) disposé entre l'anode (4) et la cathode (8), et dans lequel
au moins un autre séparateur (12) est disposé entre les empilements partiels (2),
**caractérisé en ce que**
la pluralité d'empilements partiels (2) sont positionnés les uns au-dessus des autres dans un procédé d'empilement, et
les languettes anodiques (6) de la pluralité d'empilements partiels (2) sont assemblées les unes avec les autres et avec un collecteur de courant anodique (24) dans un procédé d'assemblage en plusieurs étapes, et
les languettes cathodiques (10) de la pluralité d'empilements partiels (2) sont assemblées les unes avec les autres et avec un collecteur de courant cathodique (28) dans un procédé d'assemblage en plusieurs étapes, et le procédé comprend en outre les étapes suivantes :
a1) positionnement du collecteur de courant anodique (24)
et du collecteur de courant cathodique (28) sur un fond d'un dépôt (20) ;
b1) positionnement d'un premier empilement partiel (2) à l'intérieur du dépôt (20) ;
c1) assemblage de la languette anodique (6) du premier empilement partiel (2) avec le collecteur de courant anodique (24) et
assemblage de la languette cathodique (10) du premier empilement partiel (2) avec le collecteur de courant cathodique (28) ;
d1) positionnement d'un empilement partiel suivant (2) à l'intérieur du dépôt (20),
au moins un autre séparateur (12) étant positionné entre l'empilement partiel précédent (2) et l'empilement partiel suivant (2) ;
e1) assemblage de la languette anodique (6) de l'empilement partiel suivant (2) avec la languette anodique (6) de l'empilement partiel précédent (2) et assemblage de la languette cathodique (10) de l'empilement partiel suivant (2) avec la languette cathodique (10) de l'empilement partiel précédent (2) ;
f1) répétition des étapes d) et e) jusqu'à ce que la languette anodique (6) du dernier empilement partiel (2) de l'empilement d'électrodes (100) soit assemblée avec la languette anodique (6) de l'avant-dernier empilement partiel (2) de l'empilement d'électrodes (100), et jusqu'à ce que
la languette cathodique (10) du dernier empilement partiel (2) de l'empilement d'électrodes (100) soit assemblée avec la languette cathodique (10) de l'avant-dernier empilement partiel (2) de l'empilement d'électrodes (100).

2. Procédé d'assemblage cohésif d'un empilement d'électrodes (100) constitué d'une pluralité d'empilements partiels (2), dans lequel
un empilement partiel (2) comprend une anode (4) avec une languette anodique (6), une cathode (8) avec une languette cathodique (10), et au moins un séparateur (12) disposé entre l'anode (4) et la cathode (8), et dans lequel
au moins un autre séparateur (12) est disposé entre les empilements partiels (2),
**caractérisé en ce que**
la pluralité d'empilements partiels (2) sont positionnés les uns au-dessus des autres dans un procédé d'empilement, et
les languettes anodiques (6) de la pluralité d'empilements partiels (2) sont assemblées les unes avec les autres et avec un collecteur de courant anodique (24) dans un procédé d'assemblage en plusieurs étapes, et
les languettes cathodiques (10) de la pluralité d'empilements partiels (2) sont assemblées les unes avec les autres et avec un collecteur de courant cathodique (28) dans un procédé d'assemblage en plusieurs étapes, et le procédé comprend en outre les étapes suivantes :
a2) positionnement d'un premier empilement partiel (2) à l'intérieur d'un dépôt (20) ;
b2) positionnement d'un empilement partiel suivant (2) à l'intérieur du dépôt (20), au moins un autre séparateur (12) étant positionné entre l'empilement partiel précédent (2) et l'empilement partiel suivant (2) ;
c2) assemblage de la languette anodique (6) de l'empilement partiel suivant (2) avec la languette anodique (6) de l'empilement partiel précédent (2) et assemblage de la languette cathodique (10) de l'empilement partiel suivant (2) avec la languette cathodique (10) de l'empilement partiel précédent (2) ;
d2) répétition des étapes b) et c) jusqu'à ce que la languette anodique (6) du dernier empilement partiel (2) de l'empilement d'électrodes (100) soit assemblée avec la languette anodique (6) de l'avant-dernier empilement partiel (2) de l'empilement d'électrodes (100), et jusqu'à ce que
la languette cathodique (10) du dernier empilement partiel (2) de l'empilement d'électrodes (100) soit assemblée avec la languette cathodique (10) de l'avant-dernier empilement partiel (2) de l'empilement d'électrodes (100) ;
e2) positionnement du collecteur de courant anodique (24)
et du collecteur de courant cathodique (28) à l'intérieur du dépôt (20) ;
f2) assemblage des languettes anodiques (6) des empilements partiels (2) de l'empilement d'électrodes (100) assemblées les unes avec les autres aux étapes a) à d) avec le collecteur de courant anodique (24), et assemblage des languettes cathodiques (10) des empilements partiels (2) de l'empilement d'électrodes (100) assemblées les unes avec les autres aux étapes a) à d) avec le collecteur de courant cathodique (28).

3. Procédé selon une des revendications précédentes, **caractérisé en ce que** le procédé d'assemblage est un soudage au laser.

4. Procédé selon une des revendications précédentes, **caractérisé en ce que** des joints individuels (14) entre les languettes (6, 10) sont disposés à la même position que celle des languettes (6, 10).

5. Procédé selon une des revendications 1 à 3, **caractérisé en ce que** des joints individuels (14) entre les languettes (6, 10) sont disposés en décalage les uns par rapport aux autres.

6. Procédé selon une des revendications précédentes, **caractérisé en ce que** de l'air sous pression est appliqué dans le procédé d'assemblage pour comprimer les languettes (6, 10) au niveau des joints (14).

7. Procédé selon une des revendications précédentes, **caractérisé en ce que** des dispositifs de retenue mécanique sont appliqués dans le procédé d'empilement pour comprimer les empilements partiels (2).
